# EUROPEAN PATENT APPLICATION

(11) **EP 2 261 574 A1**
(43) Date of publication of application: **15.12.2010**
(21) Application number: 08872975.1
(22) Date of filing: 15.08.2008
(51) Int. Cl.: F24H 1/00, F24H 1/18

(54) **HEAT-PUMP HOT WATER APPARATUS**

(30) Priority: 29.02.2008 JP 2008048995
(71) Applicant: Hitachi Appliances, Inc., Minato-ku Tokyo 105-0022 (JP)
(72) Inventor: KITAMURA, Tetsuya, Tochigi 329-4493 (JP); KOIKE, Tadao, Tochigi 329-4493 (JP); TAKAGI, Junichi, Tochigi 329-4493 (JP); WAKI, Daisuke, Tochigi 329-4493 (JP)
(74) Representative: Beetz & Partner
(86) International application number: PCT/JP2008/064646
(87) International publication number: WO 2009/107261

(57) **Abstract**

In conventional heat-pump hot water apparatuses, a circulation pipeline forming a boil-up circulating path has different length depending on a distance between a hot water storage tank and a water-cooling medium heat exchanger, and the number of bending parts is different depending on a route of the pipeline. Consequently, a method for controlling the circulating flow rate using the rotation speed of a circulation pump has a problem of uncontrollability to the target circulating flow rate because of variation in the pump flow rate corresponding to the rotation speed of the pump depending on a pressure loss of the boil-up circulating path. If control is performed by directly measuring the circulating flow rate within the circulating path using a flow sensor, control to the desirable circulating flow rate is possible, although the component count is increased due to use of the flow sensor, or malfunction of the flow sensor takes place due to foreign particles clogged in the sensor or any other problems. The heat-pump hot water apparatus corrects the output of the circulation pump such that the circulating water flow rate is controlled to the setting value when the flow rate is different from the setting value due to resistance caused by the length or the number of the bending parts of the circulating path between the hot water storage tank and a water-cooling medium heat exchanger.

## Description

### TECHNICAL FIELD

The present invention relates to a heat-pump hot water apparatus, and particularly relates to an art of storing hot water at a desired temperature in a hot water storage tank by using midnight power or the like.

### BACKGROUND ART

A heat-pump hot water apparatus is known, which has a heating-up function that a heat pump cycle is driven by using midnight power or the like, and low-temperature water is heated to be hot water, and then the hot water at a desired temperature is stored in a hot water storage tank. In such a heat-pump hot water apparatus, a low-temperature water extracted from a bottom portion of the hot water storage tank is flown into a water-cooling medium heat exchanger provided in a heat pump cycle, and heated up to a set temperature, and returned to the upper portion of the hot water storage tank. Thereby, a required amount of hot water at a desired temperature can be secured in the hot water storage tank.

In such a heat-pump hot water apparatus, the heating capacity of the heat pump is generally set to a desired value so as to heat up water in a predetermined time. Further, the heat -pump hot water apparatus is designed on the condition that low-temperature water is heated up to a desired temperature by being passed through the water-cooling medium heat exchanger once. Therefore, according to the heating-up control described in Patent Document 1, the temperature of the low-temperature water flowing into the water-cooling medium heat exchanger is detected, the heat quantity necessary for heating the low-temperature water to a desired heating-up set temperature is calculated, and the circulating flow rate of the low-temperature water capable of being heated to the heating-up set temperature is calculated in accordance with the heating capacity of the heat pump. Subsequently, the rotation speed of the circulation pump, which extracts low-temperature water from the bottom portion of the hot water storage tank and flows the low-temperature water into the water-cooling medium heat exchanger, is controlled so that the circulating flow rate is controlled to the target circulating flow rate. Since the heating capacity of the heat pump varies depending on the outside temperature, correction control of the circulating flow rate is performed in accordance with the outside temperature. Further, according to the heating-up control described in Patent Document 2, the target value of the circulating flow rate in the circulating path is set based on the heating capacity in the water-cooling medium heat exchanger, the heating-up set temperature, and the detected temperature of the water inlet of the water-cooling medium heat exchanger. The circulating flow rate in the circulating path is detected by the flow rate sensor, and the circulation pump is then controlled so that the detected value of the circulating flow rate corresponds to the target value. Also, the temperature of the hot water heated by the water-cooling medium heat exchanger is detected by the temperature sensor, and the compression capacity of the compressor is controlled so that the detected temperature corresponds to the heating-up set temperature.

Patent Document 1: JP-A-2003-222396
Patent Document 2: JP-A-2007-327725

### DISCLOSURE OF THE INVENTION

### PROBLEMS TO BE SOLVED BY THE INVENTION

Meanwhile, the circulation pipe forming the heating-up circulating path has different length depending on a distance between a hot water storage tank and a water-cooling medium heat exchanger. Further, the number of bending parts is different depending on a route of the pipe. Consequently, the value of pressure loss of the heating-up circulating path differs in accordance with the installation situation of the heat-pump hot water apparatus.

Accordingly, as described in Patent Document 1, in the case of the method for controlling the circulating flow rate by the rotation speed of the circulation pump, there is a problem that the circulating flow rate cannot be controlled to the target circulating flow rate since the pump flow rate corresponding to the pump rotation speed changes in accordance with the pressure loss of the heating-up circulating path. Further, if the circulating flow rate in the circulating path is directly measured and controlled by using a flow rate sensor as described in Patent Document 2, the circulating flow rate can be controlled to a desired circulating flow rate, even if the value of the pressure loss in the heating-up circulating path varies depending on the installation situation of the heat-pump hot water apparatus. However, since a flow rate sensor is used, there is a problem of increasing the number of components. Also, there is a problem of occurrence of malfunction of the sensor due to foreign particles clogged in the flow rate sensor or the like.

### MEANS FOR SOLVING THE PROBLEMS

The present invention is directed to a heat-pump hot water apparatus, including a compressor which compresses cooling medium, a water-cooling medium heat exchanger which heats water by the high-temperature and high-pressure cooling medium discharged from the compressor, an evaporator in which the low-temperature and low-pressure cooling medium from the water-cooling medium heat exchanger flowing therein via an expansion valve is heat-exchanged with air, the cooling medium being returned to the compressor, a hot water storage tank which is communicated to a water supply source, a circulating path through which water of the hot water storage tank is extracted by a circulation pump, being flown through the water-cooling medium heat exchanger, then being returned to the hot water storage tank, a control device which controls the temperature of the hot water heated by the water-cooling medium heat exchanger to a heating-up set temperature, and a control device which controls a heating capacity of the hot water heated by the water-cooling medium heat exchanger.

In a first mode of the present invention which solves the above described problem, a function is included which corrects an output of the circulation pump so that a circulating water flow rate is controlled to a set value, when the circulating water flow rate is different from the set value due to resistance depending on a length and a number of bending parts of the circulating path between the hot water storage tank and the water-cooling medium heat exchanger.

In a second mode of the present invention which solves the above described problem, a rotation speed of the compressor is checked at every specified time, and when the rotation speed of the compressor is higher than a reference rotation speed by a specified value or more, the rotation speed of the circulation pump is controlled to decrease by the specified value.

In a third mode of the present invention which solves the above described problem, a rotation speed of the compressor is checked at every specified time, and when the rotation speed of the compressor is smaller than a reference rotation speed by a specified value or more, the rotation speed of the circulation pump is controlled to increase by the specified value.

In a fourth mode of the present invention which solves the above described problem, a changed value of the rotation speed of the circulation pump is stored, and at a next operation, the circulation pump is operated by taking into account the changed value.

In a fifth mode of the present invention which solves the above described problem, the stored changed value of the rotation speed of the circulation pump is erased at a time of cutoff of a power supply. Therefore, the rotation speed of the circulation pump can be changed when the circulating route is changed due to the relocation of the heat-pump hot water apparatus or the like.

### ADVANTAGES OF THE INVENTION

According to the present embodiment, the circulation pump can be controlled to perform a desired heating capacity, and a heating-up operation time can be kept at a predetermined time, without using a flow rate sensor or the like, even if a difference in pressure loss of the heating-up circulating path occurs due to a difference in length corresponding to the distance between the hot water storage tank and the water-cooling medium heat exchanger, and the number of bending parts depending on the route of the pipe.

### BEST MODE FOR CARRYING OUT THE INVENTION

The present invention is directed to a heat-pump hot water apparatus, including a compressor which compresses cooling medium, a water-cooling medium heat exchanger which heats water by the high-temperature and high-pressure cooling medium discharged from the compressor, an evaporator in which the low-temperature and low-pressure cooling medium from the water-cooling medium heat exchanger flowing therein via an expansion valve is heat-exchanged with air, the cooling medium being returned to the compressor, a hot water storage tank which is communicated to a water supply source, a circulating path through which water of the hot water storage tank is extracted by a circulation pump, being flown through the water-cooling medium heat exchanger, then being returned to the hot water storage tank, a control device which controls the temperature of the hot water heated by the water-cooling medium heat exchanger to a heating-up set temperature, and a control device which controls a heating capacity of the hot water heated by the water-cooling medium heat exchanger.

In the present invention, a function is included which corrects an output of the circulation pump so that a circulating water flow rate is controlled to a set value, when the circulating water flow rate is different from the set value due to resistance depending on a length and a number of bending parts of the circulating path between the hot water storage tank and the water-cooling medium heat exchanger.

Further, in the present invention, a rotation speed of the compressor is checked at every specified time, and when the rotation speed of the compressor is higher than a reference rotation speed by a specified value or more, the rotation speed of the circulation pump is controlled to decrease by the specified value.

Further, in the present invention, a rotation speed of the compressor is checked at every specified time, and when the rotation speed of the compressor is smaller than a reference rotation speed by a specified value or more, the rotation speed of the circulation pump is controlled to increase by the specified value.

Further, in the present invention, a changed value of the rotation speed of the circulation pump is stored, and at a next operation, the circulation pump is operated by taking into account the changed value.

Further, in the present invention, the stored changed value of the rotation speed of the circulation pump is erased at a time of cutoff of a power supply. Therefore, the rotation speed of the circulation pump can be changed when the circulating route is changed due to the relocation of the heat-pump hot water apparatus or the like.

According to the present embodiment, the circulation pump can be controlled to perform a desired heating capacity, and a heating-up operation time can be kept at a predetermined time, without using a flow rate sensor or the like, even if a difference in pressure loss of the heating-up circulating path occurs due to a difference in length corresponding to the distance between the hot water storage tank and the water-cooling medium heat exchanger, and the number of bending parts depending on the route of the pipe.
The other objects, features and advantages of the present invention will become apparent from the description of the following embodiment of the present invention concerning the attached drawings.

### EMBODIMENT

Hereinafter, a first embodiment according to the present invention will be described with reference to the drawings. Fig. 1 shows a system configuration diagram of a heat-pump hot water apparatus of the present invention. Fig. 2 shows a control block diagram of a compressor. Fig. 3 shows a control block diagram of a control device of a circulation pump which is a characteristic part of the present invention.

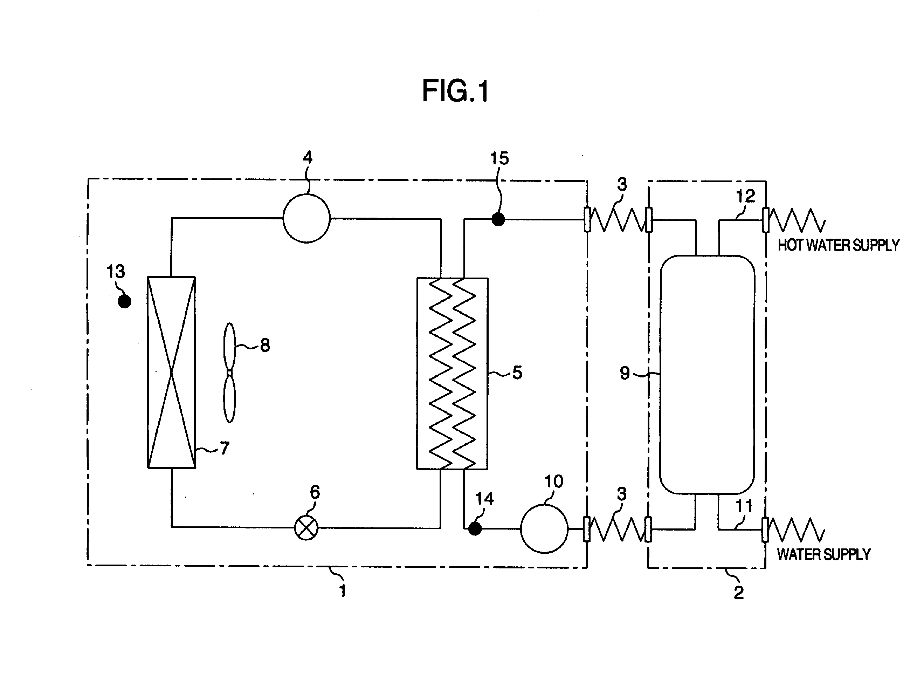

As shown in Fig. 1, the heat-pump hot water apparatus of the present embodiment is configured by a heat-pump unit 1, which is shown at the left side of the drawing, and a tank unit 2, which is shown at the right side of the drawing. The heat-pump unit 1 is equipped with a cooling medium cycle including a water-cooling medium heat exchanger inside a case. The tank unit 2 is equipped with a hot water cycle including a hot water storage tank inside the case. The heat pump unit 1 and the tank unit 2 are connected with each other at a construction site of the heat-pump hot water apparatus by using a connection pipe 3. In the cooling medium cycle, a compressor 4, a water-cooling medium heat exchanger 5, an expansion valve 6, and an evaporator 7 are circularly connected by a cooling medium pipe. In the compressor 4, cooling medium is compressed. In the water-cooling medium heat exchanger 5, a high-temperature and high-pressure cooling medium discharged from the compressor 4 are heat-exchanged with water guided from the hot water storage tank. In the expansion valve 6, the cooling medium discharged from the water-cooling medium heat exchanger 5 is decompressed. In the evaporator 7, the low-temperature and low-pressure cooling medium decompressed by the expansion valve 6 is heat-exchanged with air. The evaporator 7 has the structure in which outside air is passed by a fan 8. In the water cycle, a hot water storage tank 9, a circulation pump 10, and the water-cooling medium heat exchanger 5 are circularly connected by the circulation pipe. In the hot water storage tank 9, a required amount of hot water is stored. The water at a bottom portion of the hot water storage tank 9 are guided to the circulation pump 10. In the water-cooling medium heat exchanger 5, the water discharged from the circulation pump 10 is heat-exchanged with the cooling medium. The water discharged from the water-cooling medium heat exchanger 5 is returned to a top portion of the hot water storage tank 9. Further, a water supply source such as not-illustrated water system is connected to the bottom portion of the hot water storage tank 9 through a water supply pipe 11. A hot water supply pipe 12 for supplying hot water to a service place is connected to the top portion.

An outside air temperature sensor 13 which measures outside air temperature is provided in the vicinity of the evaporator 7. The pipes in the water cycle provided at the upstream and downstream of the water-cooling medium heat exchanger 5 are provided with a water inlet temperature sensor 14 which measures the temperature of the water flowing into the water-cooling medium heat exchanger 5, and a hot water outlet temperature sensor 15 which measures the temperature of the water flowing out from the water-cooling medium heat exchanger 5.

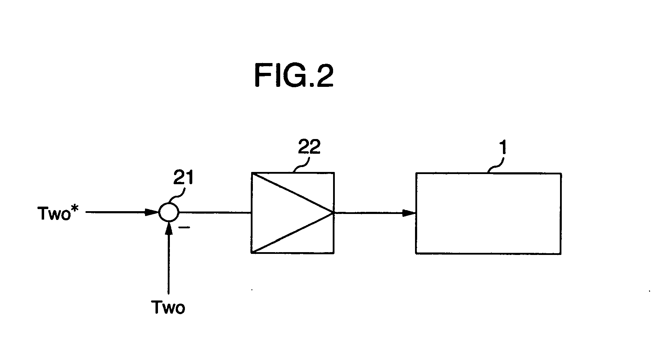

A control method of the compressor 4 is shown in Fig. 2. An operation of the compressor 4 is controlled so as to keep the detected temperature of the hot water outlet temperature sensor 15 at a heating-up set temperature by controlling the compression capacity. As shown in Fig. 2, the control device gets a heating-up set temperature Two* which is variably set and a detected temperature Two of the hot water outlet temperature sensor 15, then obtains a temperature difference ΔTwo (=Two*-Two) between them in a subtractor 21, and then outputs the temperature difference ΔTwo to a motor control device 22. The motor control device 22 controls the compression capacity by controlling the rotation speed of the motor of the compressor 4 to decrease the temperature difference ΔTwo, and controls the heating capacity of the heat pump.

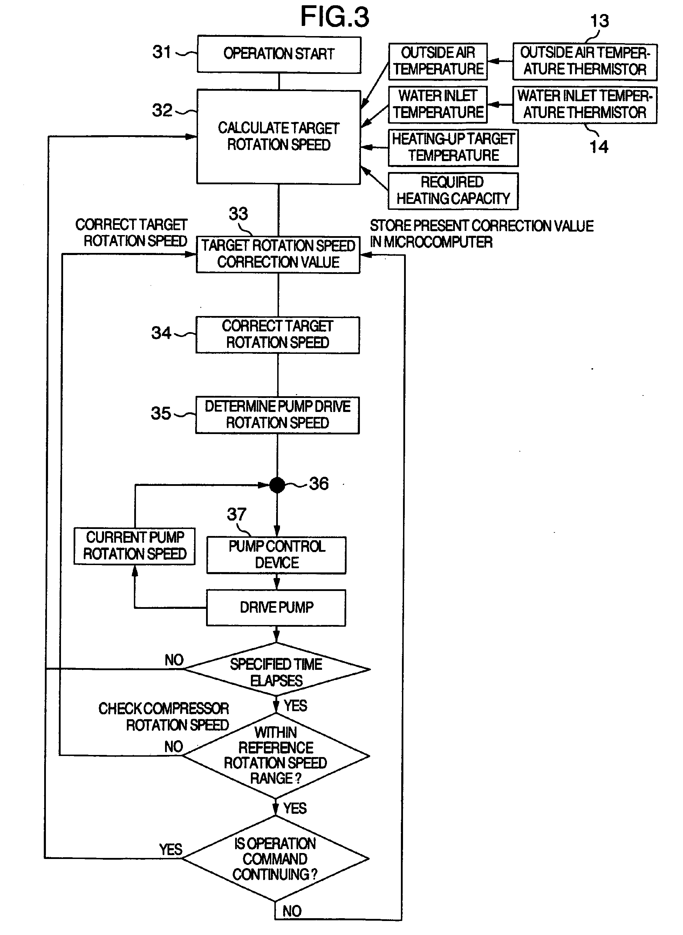

The control method of the circulation pump 10 is shown in Fig. 3. In Fig. 3, when a heating-up operation command 31 is input, the target rotation speed of the circulation pump 10 is calculated in a calculator 32 by using the outside temperature and the water inlet temperature which are respectively obtained from the outside temperature sensor 13 and the water inlet temperature sensor 14, the heating-up target temperature, and the value of the required heating capacity. After the calculation of the target rotation speed, the target rotation speed is corrected in the calculator 34 by using the value of a target rotation speed correction value 33 stored in a microcomputer, and then a pump drive rotation speed 35 is determined. In order to operate the circulation pump 10 at the determined pump drive rotation speed 35, the difference between the current pump rotation speed and the pump drive rotation speed 35 is calculated by a subtractor 36, and a pump control device 37 controls the rotation speed of the circulation pump 10 so as to decrease the difference.

When a specified time elapses after the circulation pump 10 is driven, it is confirmed whether or not the rotation speed of the compressor 4 at the time of lapse of the specified time is within the range of the reference rotation speed. When the rotation speed is higher than the range, the target rotation speed correction value 33 is reset so as to decrease the target rotation speed of the circulation pump 10. When the rotation speed of the compressor 4 is lower than the range of the reference rotation speed, the target rotation speed correction value 33 is reset so as to increase the target rotation speed of the circulation pump 10. While the heating-up operation command 31 is continued, the operation is repeated. When the heating-up operation command 31 is released, the target rotation speed correction value 33 at the time of release is stored in the microcomputer.

According to the present embodiment, the circulation pump can be controlled to perform a desired heating capacity, and a heating-up operation time can be kept at a predetermined time, without using a flow rate sensor or the like, even if a difference in pressure loss of the heating-up circulating path occurs due to a difference in length corresponding to the distance between the hot water storage tank and the water-cooling medium heat exchanger, and the number of bending parts depending on the route of the pipe.
The above is described with reference to the embodiment, but the present invention is not limited to it, and it is obvious for a person skilled in the art to be able to make various changes and modifications within the scope of the spirit and the attached claims of the present invention.

### BRIEF DESCRIPTION OF THE DRAWINGS

Fig. 1 is a system configuration diagram of a heat-pump hot water apparatus of the present invention;
Fig. 2 is a control block diagram of a compressor of the present invention; and
Fig. 3 is a control block diagram of a control device of a circulation pump which is a characteristic part of the present invention.

### DESCRIPTION OF REFERENCE NUMERALS

- 1: heat pump unit
- 2: tank unit
- 3: connection pipe
- 4: compressor
- 5: water-cooling medium heat exchanger
- 6: expansion valve
- 7: evaporator
- 8: fan
- 9: hot water storage tank
- 10: circulation pump
- 11: water supply pipe
- 12: hot water supply pipe
- 13: outside air temperature sensor
- 14: water inlet temperature sensor
- 15: hot water outlet temperature sensor
- 21, 6: subtractor
- 22: motor control device
- 31: heating-up operation command
- 32, 34: calculator
- 33: target rotation speed correction value
- 35: pump drive rotation speed
- 37: pump control device

## Claims

1. A heat-pump hot water apparatus, comprising:
a compressor which compresses cooling medium;
a water-cooling medium heat exchanger which heats water by the high-temperature and high-pressure cooling medium discharged from the compressor;
an evaporator in which the low-temperature and low-pressure cooling medium from the water-cooling medium heat exchanger flowing therein via an expansion valve is heat-exchanged with air, the cooling medium being returned to the compressor;
a hot water storage tank which is communicated to a water supply source;
a circulating path through which water of the hot water storage tank is extracted by a circulation pump, being flown through the water-cooling medium heat exchanger, then being returned to the hot water storage tank;
a control device which controls the temperature of the hot water heated by the water-cooling medium heat exchanger to a heating-up set temperature; and
a control device which controls a heating capacity of the hot water heated by the water-cooling medium heat exchanger,
wherein a function is included which corrects an output of the circulation pump so that a circulating water flow rate is controlled to a set value, when the circulating water flow rate is different from the set value due to resistance depending on a length and a number of bending parts of the circulating path between the hot water storage tank and the water-cooling medium heat exchanger.

2. A heat-pump hot water apparatus, comprising:
a compressor which compresses cooling medium;
a water-cooling medium heat exchanger which heats water by the high-temperature and high-pressure cooling medium discharged from the compressor;
an evaporator in which the low-temperature and low-pressure cooling medium from the water-cooling medium heat exchanger flowing therein via an expansion valve is heat-exchanged with air, the cooling medium being returned to the compressor;
a hot water storage tank which is communicated to a water supply source;
a circulating path through which water of the hot water storage tank is extracted by a circulation pump, being flown through the water-cooling medium heat exchanger, then being returned to the hot water storage tank;
a control device which controls the temperature of the hot water heated by the water-cooling medium heat exchanger to a heating-up set temperature; and
a control device which controls a heating capacity of the hot water heated by the water-cooling medium heat exchanger,
wherein a rotation speed of the compressor is checked at every specified time, and when the rotation speed of the compressor is higher than a reference rotation speed by a specified value or more, the rotation speed of the circulation pump is controlled to decrease by the specified value.

3. A heat-pump hot water apparatus, comprising:
a compressor which compresses cooling medium;
a water-cooling medium heat exchanger which heats water by the high-temperature and high-pressure cooling medium discharged from the compressor;
an evaporator in which the low-temperature and low-pressure cooling medium from the water-cooling medium heat exchanger flowing therein via an expansion valve is heat-exchanged with air, the cooling medium being returned to the compressor;
a hot water storage tank which is communicated to a water supply source;
a circulating path through which water of the hot water storage tank is extracted by a circulation pump, being flown through the water-cooling medium heat exchanger, then being returned to the hot water storage tank;
a control device which controls the temperature of the hot water heated by the water-cooling medium heat exchanger to a heating-up set temperature; and
a control device which controls a heating capacity of the hot water heated by the water-cooling medium heat exchanger,
wherein a rotation speed of the compressor is checked at every specified time, and when the rotation speed of the compressor is smaller than a reference rotation speed by a specified value or more, the rotation speed of the circulation pump is controlled to increase by the specified value.

4. The heat-pump hot water apparatus according to claim 2 or 3,
wherein a changed value of the rotation speed of the circulation pump is stored, and at a next operation, the circulation pump is operated by taking into account the changed value.

5. The heat-pump hot water apparatus according to claim 4,
wherein the stored changed value of the rotation speed of the circulation pump is erased at a time of cutoff of a power supply.
